# EUROPÄISCHE PATENTSCHRIFT

(11) **EP 1 295 909 B1**
(45) Veröffentlichungstag und Bekanntmachung des Hinweises auf die Patenterteilung: **20.05.2009**
(21) Anmeldenummer: 02021213.0
(22) Anmeldetag: 18.09.2002
(51) Int. Cl.: C08L 23/02, C08L 23/10, C08L 23/04

(54) **Hochfrequenzverschweissbare and kälteflexible Polymermischung sowie deren Verwendung**
High frequency sealable and cold flexible polymer conpositions and their use
Compositions des polymères soudables à haute-fréquence et flexibles au froid et leur utilisation

(30) Priorität: 20.09.2001 DE 10153408
(43) Veröffentlichungstag der Anmeldung: 26.03.2003
(73) Patentinhaber: Benecke-Kaliko Aktiengesellschaft, D-30419 Hannover (DE)
(72) Erfinder: Bühring, Jürgen, Dr., 73033 Göppingen (DE)
(74) Vertreter: Finger, Karsten

(56) Entgegenhaltungen:
- EP-A- 0 703 271
- EP-A- 0 874 022
- US-A- 5 395 881
- US-A- 5 798 413

## Beschreibung

PVC-Produkte sind für technische Applikationen seit vielen Jahren und in vielfältigsten Produkten im Einsatz. Aufgrund des Trends zur Reduktion von chlorhaltigen Materialien in allen Lebensbereichen besteht im Bauwesen, Automobilsektor und im Kabelbereich der dringende Bedarf nach halogenfreien Alternativprodukten. EPDM-Kautschuke sind zwar mögliche Alternativen, scheiden aber aus Kostengründen häufig aus. So beschreiben die WO 93/19118 und die WO 89/06256 halogenfreie Formulierungen, die sich als Isoliermaterial für Kabel eignen.

Ein Problem bei der Suche nach geeigneten halogenfreien Alternativprodukten besteht häufig darin, dass PVC-Folien sehr gut Hochfrequenz-verschweißbar sind, wohingegen mögliche PVC-Ersatzmaterialien, wie beispielsweise Polyurethanfolien oder auf dem Markt bekannte thermoplastische Polyolefin-Folien, nicht verschweißbar sind.

Eine weitere Eigenschaft, die insbesondere im Automobilsektor eine Rolle spielt, ist eine ausreichende Kälteflexibilität des Materials. Eine hohe Kälteflexibilität ist insbesondere dann wichtig, wenn bei niedrigen Temperaturen dynamische Belastungen auf den Materialien lasten. So dienen beispielsweise polyolefinische Folienmaterialien als Dekor für verdeckte Airbagsysteme. Damit sich ein Material für eine solche Applikation eignet, muss sichergestellt sein, dass es bei den Prüftemperaturen (üblicherweise bei -30°C) nicht versprödet oder hohe Reißfestigkeiten aufweist, womit die Durchdringung des Dekors durch die Airbagklappe beeinträchtigt wird. Auch muss gewährleistet sein, dass das Material aufgrund seiner Sprödigkeit nicht splittert. Diese Splitter könnten zu Verletzungen der Fahrgäste führen. Demzufolge muss eine Sprödigkeit des Folienmaterials vermieden und eine gewünschte Öffnung des Airbags bei tiefen Temperaturen (partikelflugfrei) gewährleistet sein.

Auch ist eine hohe Kälteflexibilität beispielsweise für Laderaumabdeckungen von Bedeutung, die zum Beispiel in Form von Lamellen oder Rollos verwirklicht werden können, bei denen auch in der Kälte ein einwandfreies Auf- bzw. Abrollen sichergestellt sein muss.

Gleichzeitig muß für Applikationen im Automobil- oder Fahrzeugbereich eine Wärmestabilität von mindestens 100°C gegeben sein. Wärmestabilität bedeutet in diesem Fall, dass die eingebrachte Oberflächenstruktur oder Narbe auch nach mehrtägiger Lagerung bei dieser Prüftemperatur noch erhalten bleibt und weiterhin auch keine Glanzzunahme erkennbar ist. Ferner muß die statische Dehnung bei diesen Temperaturen niedrig sein.

Im Stand der Technik gibt es einige Vorschläge, in denen versucht wurde obigen Anforderungen gerecht zu werden:

Beispielsweise offenbart die EP 998 528 brennresistente halogenfreie Polymerzusammensetzungen einer Mischung aus Ethylen-Vinylacetat-Kohlenmonoxid-Terpolymer mit zwei weiteren Komponenten, ausgewählt aus Ethylenvinylacetat oder Polyethylen sowie einem anorganischen Füllstoff, die eine gute Wärmebeständigkeit aufweisen sollen.

Die Lehre der EP 0 703 271 A1 beschreibt eine bei Raumtemperatur flexible, halogenfreie thermoplastische Polyolefinzusammensetzung. Dabei werden u.a. Ethylenvinylacetatcopolymere sowie Polyethylen sehr niedriger Dichte verwendet. Obwohl diese Formulierungen oftmals nützlich für manche Applikationen sind, haben sie den Nachteil, dass sie keine ausreichende Wärmebeständigkeit aufweisen, sobald sie Temperaturen > 80°C ausgesetzt sind.

Ferner offenbart die EP 0 977 807 B1 eine bei Raumtemperatur flexible, halogenfreie Polymermischung, die gegenüber der Offenbarung der EP 0 703 271 A1 eine erhöhte Wärmestabilität aufweist. Allerdings zeigen diese Zusammensetzungen keine günstige Kombination von Kälteflexibilität und ausreichend hoher Wärmestabilität

Die US 5,395,881 betrifft eine polare thermoplastische Polyolefin-Mischung, die flexibel ist, insbesondere beim Ersatz von Polyvinylchlorid-Folien, verwendet als Ableger für Dokumente sowie Kaschierpapier. Die Mischungen enthalten im Allgemeinen ein nicht-polares thermoplastisches Polyolefin, ein polares Ethylen-Copolymer, ein polares Ethylen-Copolymer, das mit einer Epoxy-Gruppe funktionalisiert ist, sowie ein Olefin-Polymer, funktionalisiert mit einer Carboxylgruppe oder einem Anhydrid. Sämtliche Bestandteile sind chlorfrei (sh. Abstract). Ein Vernetzen dieser Materialien ist nicht vorgesehen. Gleiches gilt für die flexiblen thermoplastischen Polyolefin-Zusammensetzungen, die in der EP 0 874 022 A1 beschrieben werden. Daraus sind Halogen-freie thermoplastische Mischungen eines polaren Kautschuks, Ethylen-Vinylacetat-Copolymers und eines Polyolefins bekannt, die flexibel sind und beim Ersatz von Polyvinylchlorid zur Herstellung verschiedener Produkte besonders nützlich sind. Sie werden auch zur Herstellung beliebiger Formkörper herangezogen, wobei gleichfalls kein Vernetzen vorgesehen ist. Schließlich geht aus der US 5,798,413 eine polare thermoplastische Polyolefin-Mischung hervor, die flexibel ist und ebenfalls als Ersatz von Polyvinylchlorid zur Herstellung von Folien, wie Papierkaschierern und Ablagen, verwendet wird. Diese Mischungen enthalten im Allgemeinen ein nicht-polares thermoplastisches Polyolefin, ein funktionalisiertes polares Ethylen-Copolymer und ein funktionalisiertes Olefin-Polymer, als Mittel zur Verbesserung der Kompatibilität der Bestandteile, wobei diese sämtlich kein Chlor enthalten. Auch hier ist es nicht vorgesehen, dass das Fertigerzeugnis vernetzt ist.

Bekanntermaßen kann eine ausreichende Kälteflexibilität durch Einbeziehen entsprechend weicher Komponenten erreicht werden, jedoch muß damit gleichzeitig der Nachteil einer mangelnden Wärmestabilität in Kauf genommen werden, so dass bislang keine zufriedenstellenden Ergebnisse zur Verfügung stehen. Lösungen, die erlauben, dass eine Hochfrequenzverschweißbare polyolefinische Folie als Substitut für PVC-Folie beispielsweise für die genannten Anwendungen fungieren kann, liegen zur Zeit noch nicht vor.

Der Erfindung lag demnach die Aufgabe zugrunde, eine halogenfreie Polymermischung für eine Folie oder einen Formkörper zu schaffen, welche die oben geschilderten Nachteile nicht aufweist und bei gleichzeitiger hoher Kälteflexibilität unter guter Wärmestabilität eine ausreichende Hochfrequenz-Verschweißbarkeit und gute Schweißnahtfestigkeit bereitstellt.

Erfindungsgemäß wird diese Aufgabe durch eine Folie oder einen Formkörper mit dem Gehalt an einer Hochfrequenz-verschweißbaren und kälteflexiblen Polymermischungin vernetzter Form gelöst, enthaltend **a)** 1 bis 30 Gew.-% Copolymer von Ethylen mit einem polaren Comonomer, ausgewählt aus der Gruppe der Vinylester gesättigter C₂-C₈-Carbonsäuren, der C₁-C₁₂-Alkylacrylate und/oder -methacrylate, wobei das Copolymer einen Schmelzindex MFI (nach DIN 53 735; 190°C, 2,16 kg) von 0,1 bis 30 g/10 min und einen Comonomerengehalt unter 25 Gew.-% aufweist; **b)** 1 bis 40 Gew.-% der Komponente b1) oder b2), ausgewählt aus: b1) einem Terpolymer, wobei jeweils ein Monomer aus den nachfolgenden drei Gruppen ausgewählt ist, die bestehen aus (1) Ethylen, Propylen und Butylen, (2) Vinylestern gesättigter C₂-C₈-Carbonsäuren, C₁-C₁₂-Alkylacrylaten und -methacrylaten und (3) Kohlenmonoxid, Glycidylacrylat und -methacrylat, wobei der Gehalt an Monomer (1) mindestens 30 Gew.-%, der Gehalt an Monomer (2) 10 bis 70 Gew.-% und der Gehalt an Monomer (3) 1 bis 20 Gew.-% beträgt und der Schmelzindex MFI (190°C, 2,16 kg) des Terpolymers zwischen 0,1 und 30 g/10 min liegt, oder (b2) einem Copolymer, wobei jeweils ein Monomer aus den nachfolgenden zwei Gruppen ausgewählt ist, die bestehen aus: (1) Ethylen, Propylen und Butylen sowie (2) Vinylestern gesättigter C₂-C₈-Carbonsäuren, C₁-C₁₂-Alkylacrylaten und - methacrylaten; mit einem Schmelzindex MFI (190°C, 2,16 kg) von 0,1 bis 30 g/10 min und einem Comonomerengehalt über 25 Gew.-% und c) 35 bis 75 Gew.-% eines thermoplastischen Polyolefins mit einem Schmelzpunkt über 115°C, ausgewählt aus der aus Ethylenhomopolymer, Ethylencopolymer, Propylenhomopolymer und Propylencopolymer oder deren Gemischen bestehenden Gruppe, wobei dieses Polymer mit 0,1 bis 7 Gew.-%, insbesondere 0,5 bis 5 Gew.-% ungesättigter Carbonsäure, ungesättigter Dicarbonsäure, deren Ester und/oder Anhydrid gepfropft sein kann, wobei sich die Menge an a) bis c) auf 100 Gew.-% ergänzt und der Anteil der Komponenten a) + b1) oder a) + b2), bezogen auf die Gesamtmenge der Polymermischung, 50 Gew.-% oder weniger beträgt.

Als Untergrenze für den Anteil der Komponenten **a)** + **b1)** oder a) + **b2**) sind etwa 25 Gew.-% zu nennen, da ansonsten die Hochfrequenzverschweißbarkeit beeinträchtigt werden kann.

Erfindungsgemäß wird demzufolge eine Polymermischung in Form einer für die gewünschte Anwendung maßgeschneiderten Zusammensetzung bereitgestellt, die im wesentlichen drei Komponenten umfaßt und die erforderlichen Eigenschaftsprofile zeigt. Einerseits sind polare Polymere vorhanden, welche die Hochfrequenzverschweißbarkeit ermöglichen, die erhöhte Kälteflexibilität unterstützen und eine hohe statische Dehnung zur Verfügung stellen. Diese polare Gruppen aufweisenden Polymere werden mit einem Gehalt von höchstens 50 Gew.-% eingesetzt. Überraschenderweise stellt obige Polymermischung zusätzlich eine erhöhte Temperaturstabilität zur Verfügung, ohne jedoch die Verschweißbarkeit und ausgezeichnete Kälteflexibilität zu beeinträchtigen und weiterhin wird eine ausreichend niedrige statische Dehnung bei erhöhter Temperatur sichergestellt.

Die einzelnen Komponenten werden nachfolgend im einzelnen erläutert:

Die erfindungsgemäße Komponente a) enthält ein Copolymer von Ethylen mit einem polaren Comonomer. Der Schmelzindex MFI (nach DIN 53 735; 190°C, 2,16 kg) des Copolymers liegt im Bereich von 0,1 bis 30 g/10 min, insbesondere 0,5 bis 10 g/10 min. Als polare Comonomeren werden Vinylester gesättigter C₂-C₈-Carbonsäuren, der C₁-C₁₂-Alkylacrylate und/oder -methacrylate verwendet. Bevorzugte Beispiel sind Ethylen-Vinylacetat-Copolymer, Ethylen-Methylacrylat-Copolymer, Ethylen-Ethylacrylat-Copolymer und/oder Ethylen-Butylacrylat-Copolymer. Der Comonomerengehalt wird unter 25 Gew.-%, bevorzugt unter 19 Gew.-%, eingestellt. Besonders bevorzugte Beispiele stellen Ethylen-Vinylacetat-Copolymer mit einem Vinylacetatgehalt unter 25 Gew.-%, insbesondere unter 19 Gew.-%, dar sowie Ethylen-Methylacrylat-Copolymer mit einem Methylacrylatgehalt unter 25 Gew.-%, insbesondere unter 19 Gew.-%.

Zusätzlich zur Komponente a) wird eine Komponente b) herangezogen, welche die alternativen Möglichkeiten b1) und/oder b2) umfaßt:
So kann ein Terpolymer (Komponente b1)) eingesetzt werden, das aus den Monomeren (1): Ethylen, Propylen und/oder Butylen, den Monomeren (2): einem oder mehreren der oben genannten Comonomeren und den Monomeren (3): Kohlenmonoxid, Glycidylacrylat und/oder -methacrylat aufgebaut ist, wobei die einzelnen Monomereinheiten statistisch über die Polymerkette verteilt sind.

Der Gehalt an Monomeren (1) beträgt mindestens 30 Gew.-%, bevorzugt 40 bis 80 Gew.-%, insbesondere 50 bis 75 Gew.-%. Monomer (2) liegt in einer Menge von 10 bis 70 Gew.-%, bevorzugt 10 bis 50 Gew.-%, insbesondere 15 bis 35 Gew.-% vor. Für die Monomeren (3) werden 1 bis 20 Gew.-%, bevorzugt 2 bis 15 Gew.-%, insbesondere 3 bis 12 Gew.-% eingesetzt. Der MFI-Wert (190°C, 2,16 kg) des Terpolymers liegt zwischen 0,1 und 30 g/10 min, bevorzugt zwischen 0,1 und 15 g/10 min, insbesondere zwischen 0.5 und 10 g/10 min.

Nach einer besonders bevorzugten Ausführungsform stellt das Terpolymer **b1)** ein Ethylen-Vinylacetat-Kohlenmonoxid-Terpolymer dar. Die Gegenwart von Kohlenmonoxid bietet Vorteile hinsichtlich der Hochfrequenzverschweißbarkeit, so dass die Menge an polare Gruppen enthaltenden Polymeren entsprechend der Komponente **a)** oder **b)** wesentlich verringert werden kann.

Alternativ kann anstelle des beschriebenen Terpolymers auch ein Copolymer b2) eingesetzt werden, welches ein Copolymer von Ethylen, Propylen und/oder Butylen mit den oben beschriebenen polaren Comonomeren darstellt. Erfindungsgemäß weist dieses Copolymer einen Schmelzindex MFI (190°C, 2,16 kg) von 0,1 bis 30 g/10 min auf. Der Comonomerengehalt wird hierbei über 25 Gew.-% eingestellt. Beispielsweise kann das Copolymer in Form der Komponente b2) ein Ethylen-Vinylacetat-Copolymer mit einem Vinylacetatgehalt über 35 Gew.-% darstellen oder ein Ethylen-Methylacrylat-Copolymer mit einem Methylacrylatgehalt über 35 Gew.-%.

In Einzelfällen kann es bevorzugt sein, dass bei Vorliegen eines Ethylen-Vinylacetat-Kohlenmonoxid-Terpolymers mit 30 mindestens Gew.-% Ethylen und 10 bis 70 Gew.-% Vinylacetat und 1 bis 40 Gew.-% Kohlenmonoxid sowie eines Ethylen-Vinylacetat-Copolymers mit 25 bis 90 Gew.-% Ethylen und 10 bis 75 Gew.-% Vinylacetat kein anorganischer Füllstoff vorliegt. Ferner ist es bevorzugt, das bei Vorliegen eines Ethylen-Vinylacetat-Kohlenmonoxid-Terpolymers mit mindestens 30 Gew.-% Ethylen, 10 bis 70 Gew.-% Vinylacetat und 1 bis 20 Gew.-% Kohlenmonoxid und eines Polyolefins, ausgewählt aus der Gruppe, bestehend aus einem LLDPE mit einer spezifischen Dichte über 0,925, einem LDPE mit einer spezifischen Dichte über 0,920, einem HDPE, einem Polypropylenhomopolymer und/oder einem Ethylen-Propylen-Copolymer, kein Ethylen-Vinylacetat mit 30 bis 90 Gew.-% Ethylen und 10 bis 70 Gew.-% Vinylacetat vorhanden ist.

Es kann ferner bevorzugt sein, dass wenn ein Ethylen-Vinylacetat mit 30 bis 90 Gew.-% Ethylen und 10 bis 70 Gew.-% Vinylacetat vorliegt, kein LLDPE mit einer spezifischen Dichte von weniger als 0,920 vorhanden ist.

Nach einer erfindungsgemäß bevorzugten Ausführungsform liegt der Anteil der Komponente a) Zwischen 3 und 20 Gew.-%, insbesondere zwischen 5 und 15 Gew.-%, und der Anteil der Komponente b) zwischen 5 und 30 Gew.-%, insbesondere zwischen 5 und 25 Gew.-%, noch bevorzugter zwischen 10 bis 20 Gew.-%, jeweils bezogen auf die Gesamtmischung.

Die erfindungsgemäße Polymermischung enthält als Komponente c) ein thermoplastisches Polyolefin, welches einen Schmelzpunkt über 115°C aufweist. Das eingesetzte Polyolefin kann aus der Gruppe Ethylenhomopolymer, Ethylencopolymer, Propylenhomopolymer und Propylencopolymer sowie deren Mischungen ausgewählt sein. Als Comonomere kommen neben den oben für Komponente **a)** genannten insbesondere auch C₃-C₁₂-α-Olefine für Polyethylen bzw. C₂- und ₄-C₁₂-α-Olefine für Polypropylen in Frage. Ferner könnnen ebenfalls die entsprechenden Pfropfpolymerisate eingesetzt werden. Das Polymer kann weiterhin mit 0,1 bis 7 Gew.-%, bevorzugt 0,5 bis 5 Gew.-%, insbesondere 0,5 bis 3 Gew.-% (Di-)Carbonsäure und/oder -derivat gepfropft werden. Als Pfropfmonomere können ungesättigte Carbonsäuren oder ungesättigte Dicarbonsäuren, deren Ester und/oder Anhydride dienen. Ungesättigte Carbonsäuren oder deren Derivate sind beispielsweise Acrylsäure, Methacrylsäure, Maleinsäure, Maleinsäureanhydrid und Fumarsäure. Mit Maleinsäureanhydrid gepfropfte Ethylenhomo- oder -copolymerisate sind besonders bevorzugt. Es können auch Gemische dieser Polymere bzw. Propfpolymere zum Einsatz kommen.

Das thermoplastische Polyolefin stellt nach einer Ausführungsform ein gegebenenfalls gepfropftes Ethylenhomopolymer oder -copolymer einer Dichte über 0,910 g/l, insbesondere über 0,920 g/l dar. Dieses weist einen Schmelzindex MFI (190°C, 2,16 kg) von etwa 0,1 bis 30 g/10 min, insbesondere 0,5 bis 10 g/10 min, noch bevorzugter 0,5 bis 7 g/10 min, auf.

In einer weiteren erfindungsgemäßen Variante handelt es sich bei dem thermoplastischen Polyolefin der Komponente c) um ein gegebenenfalls gepfropftes Polypropylen aus der Gruppe der Homopolymere, Block- oder Random-Copolymere mit C₂- oder C₄- bis C₁₂-α-Olefinen als Comonomeren. Bei diesem Propylencopolymer kann es sich beispielsweise auch um ein segmentiertes Blockcopolymer handeln, bei dem die Polypropylenblöcke beidseitig von statistischen Copolymerblöcken flankiert werden oder ein statistischer Copolymerblock beidseitig von Polypropylenblöcken flankiert wird.

Die Polypropylene und Polyethylene können mit einem Kautschuk gepfropft sein oder ein Block-Copolymer mit diesem bilden.

Als α-Olefine werden zum Beispiel Ethen, 1-Buten, 1-Penten, 1-Hexen, 1-Octen und/oder 4-Methyl-penten-1 eingesetzt, wobei im thermoplastischen Polyolefin eine Menge von 0,1 bis 25 Gew.-%, vorzugsweise 0,1 bis 10 Gew.-% an α-Olefinen bevorzugt vorliegt. Die Dichte des Polypropylens liegt hierbei zumeist über 0,90 g/l. Der Schmelzpunkt beträgt in der Regel über 120°C. Der MFI-Wert wird vorzugsweise zwischen 0,1 und 30 g/10 min, insbesondere 0,3 bis 20 g/10 min, bevorzugter 0,3 bis 7 g/10 min (230°C, 2,16 kg), eingestellt.

Gemäß einer dritten erfindungsgemäßen Alternative der Komponente c) werden unvernetzte, partiell oder vollständig vernetzte thermoplastische Polyolefin-Elastomeren ausgewählt, die 10 bis 77 Gew.-% Propylenhomopolymer oder -copolymer und 23 bis 90 Gew.-% eines Copolymers, basierend auf Ethylen und einem oder mehreren C₃-C₁₂-α-Olefinen und wahlweise ein nichtkonjugiertes Dien enthalten.

Geeignete nichtkonjugierte Diene sind lineare aliphatische Diene, wie 1,4-Hexadien, Alkylidenbicycloalkene, wie 5-Ethyliden-2-norbornen, Alkenylbicycloalkene, wie 5-Alkenyl-2-norbornene, Bicycloalkadiene, wie Bicyclopentadien und Alkenylcycloalkene, wie Vinylcyclohexen oder auch direaktive nichtkonjugierte Diene, wie 2,5-Norbornadien oder 1,6-Octadien.

Unter den "partiell oder vollständig vernetzten thermoplastischen Polyolefin-Elastomeren" sollen in der vorliegenden Beschreibung polymere Vermischungen von Polyolefin(en) mit Kautschuk verstanden werden, die entsprechend vernetzt sein können. Besonders bevorzugt wird in den oben genannten vernetzten Polyolefin-Elastomer-Systemen der Gelgehalt auf 5 bis 80 %, bevorzugt 5 bis 60 %, insbesondere 5 bis 40 %, eingestellt. Dies hat den Vorteil, dass eine definierte Phasen-Morphologie der Kautschukphase vorliegt und dass erhöhte Anteile weicher Polymerkomponenten, die die Kälteflexibilität verbessern, aufgrund der Vernetzung zu keiner Verschlechterung der Temperaturstabilität führen. Vorzugsweise weist das in Komponente c) eingesetzte Ethylen-Copolymer eine Glasübergangstemperatur unterhalb von -20°C auf.

In einer weiteren erfindungsgemäßen Ausführungsform der Erfindung wird zusätzlich ein Ethylen-Copolymer mit einem Schmelzpunkt von 65°C bis 110°C und/oder einer Dichte von 0,86 g/l bis 0,91 g/l eingesetzt. Die Konzentration dieses Ethylen-Copolymeren beträgt höchstens 30 Gew.-%, bevorzugt 5 bis 20 Gew.-%. Als Comonomere kommen C₄-bis C₁₂- insbesondere C₄- bis C₈-α-Olefine in Betracht. Dieser Zusatz ist besonders vorteilhaft, da er die Siegelbarkeit verbessert.

Die Einhaltung der angegebenen MFI-Werte der Komponenten ist kritisch, weil beim Herstellungsprozeß die erweichten Massen eine ausreichende Festigkeit aufweisen müssen, um maschinengängig zu sein. Andererseits muß die Polymermischung beim Verschweißvorgang eine hinreichende Fließfähgkeit besitzen.

Die erfindungsgemäß eingesetzte Polymermischung kann außerdem Zusatzstoffe in einer Menge enthalten, in der die Hochfrequenzverschweißbarkeit nicht wesentlich beeinflußt wird. Als Beispiele für Füllstoffe sind Calciumcarbonat, Calciumsilikat, Talkum, Silika, Glimmer und Aluminiumoxid zu nennen. Die Füllstoffe können in einer Menge bis zu 30 Gew.-%, bezogen auf die Menge an polymeren Bestandteilen, eingesetzt werden. Ferner können weitere Additive, wie Antiblockmittel, Gleitmittel, Lichtschutzmittel, Antioxidantien, Farbstoffe, Pigmente, Flammschutzmittel, Antistatika oder Vernetzungshilfsmittel zugesetzt werden. Die Additive werden üblicherweise in Gehalten bis zu 30 Gew.-%, bezogen auf die Menge an polymeren Komponenten, zugegeben.

Nach einer besonders vorteilhaften Ausführungsform werden aliphatische und/oder naphthenische Prozeßhilfsmittel in einer Menge von 1 bis 10 Gew.-%, bevorzugt 1 bis 8 Gew.-%, insbesondere 1 bis 5 Gew.-%, eingesetzt, die bei Raumtemperatur flüssig sind und erst unterhalb von etwa 0°C eine wachsartige Konsistenz annehmen. Hierbei handelt sich beispielsweise um Weißöle (niedermolekulare Aliphate).

Die erfindungsgemäß eingesetzte Polymermischung kann wie folgt hergestellt werden: Vorzugsweise werden die granulierten Rohstoffe kalt gemischt und einem Extruder, beispielsweise einem Zweischneckenextruder, zugeführt und dort plastifiziert. Das Material wird über eine Breitschlitzdüse zu einer Bahnenware (Folie) ausgetragen und von Nachfolgeeinrichtungen aufgenommen. Formkörper sind beispielsweise durch Tiefziehen aus der Folie erhältlich.

Gegenstand der Erfindung ist demnach eine Folie oder ein Formkörper, enthaltend die erfindungsgemäß eingesetzte Polymermischung, welche nach den üblichen Verfahren herstellbar sind. Es ist, daß unerläßlich die Folie oder den Formkörper nach der Formgebung vernetzt vorliegt oder auschließend vernetzt wird.

Die Vernetzung insbesondere unter Einwirkung von Elektronen oder γ-Strahlen erfolgen. Zweckmäßigerweise liegt nach dem Vernetzen der gesamte Gelgehalt zwischen 5 und 80%, bevorzugt zwischen 10 und 70%, insbesondere zwischen 20 und 60%.

Die Folie, insbesondere Weichfolie, oder der Formkörper findet vorzugsweise im Automobilbereich Verwendung als Airbagverkleidung, Himmel, Kopfstütze, Halteschlaufe, Hutablage, Sitz- und Rückpolsterbezug und rückseitige Verkleidung der Vordersitze, Sonnenblende, Trittschutz, Türseitenverkleidung oder Laderaumabdeckung. Daneben sind Anwendungen bei der Kofferauskleidung, bei Bucheinbänden etc. möglich.

In einer vorteilhaften Ausführung als Laderaumabdeckung kann die Folie zweckmäßigerweise aus einer Ober- und einer Unterfolie, einem dazwischenliegenden Träger sowie gegebenenfalls weiteren Folien und Schichten aufgebaut sein, wobei die Ober- und Unterfolie die Polymermischung der Erfindung enthält.

Die mit der Erfindung verbundenen Vorteile sind vielschichtig. So besitzt die erfindungsgemäß eingesetzte Polymermischung gegenüber den eingangs geschilderten Lehren des Standes der Technik eine überraschende Kombination von Eigenschaften. Die Zusammensetzungen weisen eine ausgezeichnete Kälteflexibilität auf. Somit können Folien oder Formkörper bereitgestellt werden, die auch bei niedrigen Temperaturen hohen dynamischen Belastungen ausgesetzt werden können, ohne zu zersplittern. Gleichzeitig wird eine ausreichend hohe Temperaturstabilität zur Verfügung gestellt. Eine wesentliche Eigenschaft der erfindungsgemäß bereitgestellten Polymermischung stellt deren Hochfrequenz-Verschweißbarkeit dar, wodurch sich Anwendungen erschließen, die mit den Systemen aus dem Stand der Technik bislang nicht möglich waren.

Ein besonderer Vorteil liegt auch darin, dass die Lehre der Erfindung es ermöglicht z.B. neue Designerelemente mit halogenfreien zwei- oder mehrfarbigen Folien umzusetzen, wobei die Anforderungen der Automobilindustrie in hohem Maße erfüllt werden.

Die erfindungsgemäß herangezogen Polymermischung ermöglicht demnach die gezielte Steuerung der Eigenschaftsprofile und liefert eine für die entsprechende Verwendung maßgeschneiderte Zusammensetzung.

Nachfolgend wird die Erfindung anhand von Beispielen, welche die erfindungsgemäße Lehre nicht beschränken sollen, im einzelnen beschrieben. Dem Fachmann sind im Rahmen der erfindungsgemäßen Offenbarung weitere Ausführungsbeispiele offensichtlich.

### Beispiele

In den Beispielen werden folgende Einsatzstoffe verwendet:
- EVA 1 Ethylen-Vinylacetat-Copolymer, MFI = 0,4 g/10min (190°C, 2,16 kg) Vinylacetatgehalt: 17 Gew.-%
- EVA 2 Ethylen-Vinylacetat-Copolymer, MFI = 2 g/10min (190°C, 2,16 kg) Vinylacetatgehalt: 25 Gew.-%;
- EVA 3 Ethylen-Vinylacetat-Copolymer, MFI = 3 g/10min (190°C, 2,16 kg) Vinylacetatgehalt: 40 Gew.-%;
- EVA 4 Ethylen-Vinylacetat-Copolymer, MFI = 0,7 g/10min (190°C, 2,16 kg) Vinylacetatgehalt: 18 Gew.-%;
- EMA Ethylen-Methylacrylat-Copolymer, MFI = 2 g/10 min (190°C, 2,16 kg), Methylacryatgehalt: 18 Gew.-%
- EVACO Ethylen-Vinylacetat-Kohlenmonoxid Terpolymer, MFI = 15g/10min (190°C, 2,16 kg), Vinlyacetatgehalt: 20 Gew.-%, Kohlenmonoxidgehalt 8 Gew.-%;
- EGB Ethylen-Butylacrylat-Glycidylmethacrylat Terpolymer, MFI = 12g/10min (190°C, 2,16 kg), Butylacrylatgehalt: 28 Gew.-%, Glycidylethergehalt 5 Gew.-%;
- PE 1 LLDPE mit einer Dichte von 0,93 g/l und einem MFI von 5 g/10min (190°C, 2,16 kg);
- PE 2 VLDPE mit einer Dichte von 0,87 g/l und einem MFI von 5g/10min (190°C, 2,16 kg);
- PE 3 LDPE mit einer Dichte von 0,92 g/l und einem MFI von 0,8g/10min (190°C, 2,16 kg);
- PE 5 HDPE mit einer Dichte von 0,958 g/l und einem MFI von 1,5 g/10min (190°C, 2,16 kg);
- PP random-PP mit einem Ethylengehalt von ca. 3 Gew.-% und einem MFI von 0,8 g/10min (230°C, 2,16 kg);
- TPE-O 1 enthaltend ca. 65% eines Ethylen/Propylen-Copolymeren dessen Ethylengehalt ca. 70 Gew.-% beträgt und ca. 35 Gew.-% eines Propylen/Ethylen-Copolymeren, dessen Ethylengehalt ca. 3 Gew.-% beträgt. Der MFI liegt ca. bei 1,8 g/10min (230°C, 2,16 kg);
- TPE-O 2 enthaltend ca. 55% eines Ethylen/Propylen-Copolymeren dessen Ethylengehalt ca. 50 Gew.-% beträgt und ca. 45 Gew.-% eines Propylen/Ethylen-Copolymeren, dessen Ethylengehalt < 1 Gew.-% beträgt. Der MFI liegt ca. bei 1,2 g/10min (230°C, 2,16 kg) und
- TPE-V enthaltend 55% EPDM und 45% eines Polypropylens. Der MFI liegt bei ca. 12g / 10min (230°C, 10 kg) und der Gelgehalt bei ca. 30%.

### Vergleichsbeispiel 1

In einem Trommelmischer werden 20 Gew.-% LLDPE, 40 Gew.-% des TPE-O 2, 10 Gew.-% PP und 30 Gew.-% eines VLDPEs gemischt und anschließend in einem Zweiwellenextruder bei 190°C zu einer 0,5 mm starken Folie extrudiert. Zwei Folien werden auf einer Hochfrequenzschweißantage mit einem Generator G4000 SD und der Presse KH500, jeweils von der Firma Kiefel, bei Raumtemperatur verschweißt. Folgende Schweißparameter wurden gewählt:

| | |
|---|---|
| Schweißdruck: | 1600 N |
| Schweißzeit: | 4 sec |
| Schweißspannung: | 2100 V |
| Elektrode: | 150 x 5 mm |

Die physikalischen und mechanischen Eigenschaften der Folien und der Schweißnähte sind in Tabelle 1 zusammengefasst.

### Vergleichsbeispiele 1-8 und Beispiele 1

Es wurden die in den Tabellen 1 und 2 angegebenen Komponenten gemischt. Die Folienherstellung erfolgte analog zu Beispiel 1. Es wurden homogene Folien mit denen in den Tabellen 1 und 2 angegebenen Eigenschaften erhalten.

Die Folie nach Vergleichsbeispiel 1 zeigt die Eigenschaften einer marktreifen TPO-Folie, die nicht HF-schweißbar ist. Weiterhin reicht die Kälteflexibilität ausgedrückt durch die Spannung bei 5% Dehnung in [MPa] mit 18 MPa, nicht aus, um beispielsweise das sichere Einrollen einer Laderaumabdeckfolie zu erlauben.

Die Folien nach Vergleichsbeispiel 2 bis 4 sind den Beispielen aus der WO 98/47958 (EP 977 807) entnommen. Diese zeigen eine ausreichend gute Hochfrequenzverschweißbarkeit, allerdings ist entweder die Kälteflexibilität oder die Stabilität bei hohen Temperaturen nicht gegeben, d.h. bei Vorliegen einer höheren Temperaturstabilität konnte keine ausreichende Kälteflexibilität erreicht werden, und bei Vorliegen einer höheren Kälteflexibilität wurde keine ausreichend hohe Temperaturstabilität erzielt.

Die Folie nach Vergleichsbeispiel 5 zeigt die signifikante Erniedrigung der mechanischen Eigenschaften ohne den Zusatz von EVA mit einem VAc-Gehalt von < 25 % sowie die Einschränkungen in den Oberflächeneigenschaften.

Die Folie nach Vergleichsbeispiel 6 zeigt, dass der Gesamtgehalt an polaren Polymeren vorteilhafterweise >25 Gew.% liegt, um eine Hochfrequenzverschweißbarkeit zu erreichen.

Die Folien nach den Vergleichsbeispielen 7 und 8 zeigen die unzureichende Wärmestabilität bei hohen Rezepturanteilen von VLDPE oder LDPE.

**Tabelle 1**

| | Vergleichesbeispiel 1 | Vergleichsbeispiel 2 | Vergleichsbeispiel 3 | Vergleichsbeispiel 4 | Vergleichsbeispiel 5 | Vergleichsbeispiel 6 | Vergleichsbeispiel 7 | Vergleichsbeispiel 8 |
|---|---|---|---|---|---|---|---|---|
| EVA 1 | | | | | | 10 | 15 | 15 |
| EVA 2 | | 16,5 | 16,5 | 16,5 | | | | |
| EVA 3 | | 5 | 5 | 5 | | | | |
| EVA 4 | | 16,5 | 16,5 | 16,5 | | | | |
| EVACO | | 31 | 31 | 31 | 40 | 15 | 25 | 25 |
| PE 1 | 20 | | | | 60 | 75 | | |
| TPE-O1 | | | | | | | | |
| TPE-O2 | 40 | | | | | | | |
| TPE-V | | | | | | | | |
| PP | 10 | | | 31 | | | | |
| PE 2 | 30 | 31 | | | | | 60 | |
| PE 5 | | | 31 | | | | | |
| PE 3 | | | | | | | | 60 |
| | | | | | | | | |
| Extrusionsverhalten | i.O. | i.O. | i.O. | i.O. | klebrige Oberfläche | i.O. | i.O. | i.O. |
| Reißfestigkeit [MPa] | n.b. | n.b. | n.b. | n.b. | n.b. | n.b | 18 | 18 |
| Reißdehnung [%] | n.b. | n.b. | n.b. | n.b. | n.b | n.b. | 700 | 700 |
| Spannung bei 5% Dehnung [MPa] -30°C | 17 | 9 | 19 | 22 | 23 | n.b | 4 | 17 |
| Reißfestigkeit [MPa]-30°C | 49 | 56 | 48 | 51 | 21 | n.b | 47 | 37 |
| Reißdehnung [%] -30°C | 450 | 460 | 390 | 400 | 240 | n.b. | 430 | 400 |
| HF-verschweißbarkeit | n.i.O. | i.O. | i.O. | i.O. | i.O. | n.i.O. | i.O | i.O. |
| Schälkraft [N] | | n.b. | n.b. | n.b. | n.b. | --- | 50 | n.b. |
| Wärmedehnung 110°C, 1h [%] | 1 | >10 | >10 | > 10 | 2 | 0 | >10 | > 10 |
| Oberflächenänderung nach 24h, 100°C | Kleine | Glanz, Narbe verflacht | Clanz, Narbe verflacht | keine | Keine | keine | Glanz, Narbe verflacht | Glanz, Narbe verflacht |

**Tabelle 2**

| | Beispiel 1 |
|---|---|
| EVA 1 | 10 |
| EVA 2 | |
| EVA 3 | 10 |
| EMA | |
| EVACO | 15 |
| EGB | |
| PC 1 | 30 |
| TPE-O1 | 10 |
| TPE-O2 | |
| TPE-V | 25 |
| Rubber | |
| PP | |
| PE 2 | |
| | |
| Extrusionsverhalten | i.O. |
| Reibfestigkeit [Mpa] | 14 |
| Reißdehnung [%] | 740 |
| Spannung bei 5% Dehnung [MPa] -30°C | 11 |
| Reißfestigkeit [MPa] -30°C | 29 |
| Reißdehnung [%] -30°C | 410 |
| HF-verschweißbarkeit | i.O. |
| Schälkraft [N] | 42 |
| Wärmdehnung 110°C_{,} 1h [%] | 3 |
| Oberflächenänderung nach 24h, 100°C | keine |

| | |
|---|---|
| Verwendete Abkürzungen in der Tabelle: n.i.O. nicht in Ordnung i.O. in Ordnung n.b. nicht bestimmt | |

Die Bruchspannung [MPa] und die Bruchdehnung [%] wurden nach ISO 527/3 bestimmt. Die Festigkeit der Schweißnähte wurde durch die Messung der Schälkraft in Anlehung an DIN 53357 in Längsrichtung geprüft. Als Maß für die Kälteflexibilität oder Steifigkeit der Materialien wurden die Spannungswerte bei 5 % Dehnung herangezogen. Die Prüfung erfolgte dazu in Anlehnung an ISO 527/3.

Die im Beispiel 1 genannte erfindungsgemäße Folie hingegen vereinigen zufriedenstellende physikalisch-mechanische Eigenschaften der Folie, gute Produktionseigenschaften, gute Hochfrequenzverschweißbarkeit, ausreichend hohe Thermostabilität und ausgezeichnete Eigenschaften hinsichtlich der Kälteflexibilität.

## Patentansprüche

1. Folie oder Formkörper mit dem Gehalt an einer Hochfrequenz-verschweißbaren und kälteflexiblen Polymermischungin vernetzter Form, enthaltend
**a)** 1 bis 30 Gew.-% Copolymer von Ethylen mit einem polaren Comonomer, ausgewählt aus der Gruppe der Vinylester gesättigter C₂-C₈-Carbonsäuren, der C₁-C₁₂-Alkylacrylate und/oder -methacrylate, wobei das Copolymer einen Schmelzindex MFI (nach DIN 53 735; 190°C, 2,16 kg) von 0,1 bis 30 g/10 min und einen Comonomerengehalt unter 25 Gew.-% aufweist;
**b)** 1 bis 40 Gew.-% der Komponente b1) oder b2), ausgewählt aus:
b1) einem Terpolymer, wobei jeweils ein Monomer aus den nachfolgenden drei Gruppen ausgewählt ist, die bestehen aus
(1) Ethylen, Propylen und Butylen,
(2) Vinylestern gesättigter C₂-C₈-Carbonsäuren, C₁-C₁₂-Alkylacrylaten und -methacrylaten und
(3) Kohlenmonoxid, Glycidylacrylat und -methacrylat,
wobei der Gehalt an Monomer (1) mindestens 30 Gew.-%, der Gehalt an Monomer (2) 10 bis 70 Gew.-% und der Gehalt an Monomer (3) 1 bis 20 Gew.-% beträgt und der Schmelzindex MFI (190°C, 2,16 kg) des Terpolymers zwischen 0,1 und 30 g/10 min liegt, oder
(b2) einem Copolymer, wobei jeweils ein Monomer aus den nachfolgenden zwei Gruppen ausgewählt ist, die bestehen aus:
(1) Ethylen, Propylen und Butylen sowie
(2) Vinylestern gesättigter C₂-C₈-Carbonsäuren, C₁-C₁₂-Alkylacrylaten und -methacrylaten;
mit einem Schmelzindex MFI (190°C, 2,16 kg) von 0,1 bis 30 g/10 min und einem Comonomerengehalt über 25 Gew.-% und
**c)** 35 bis 75 Gew.-% eines thermoplastischen Polyolefins mit einem Schmelzpunkt über 115°C, ausgewählt aus der aus Ethylenhomopolymer, Ethylencopolymer, Propylenhomopolymer und Propylencopolymer oder deren Gemischen bestehenden Gruppe, wobei dieses Polymer mit 0,1 bis 7 Gew.-%, insbesondere 0,5 bis 5 Gew.-% ungesättigter Carbonsäure, ungesättigter Dicarbonsäure, deren Ester und/oder Anhydrid gepfropft sein kann,
wobei sich die Menge an **a)** bis **c)** auf 100 Gew.-% ergänzt und der Anteil der Komponenten **a)** + **b1)** oder **a)** + **b2)**, bezogen auf die Gesamtmenge der Polymermischung, 50 Gew.-% oder weniger beträgt.

2. Folie oder Formkörper nach Anspruch 1, **dadurch gekennzeichnet, dass** die Komponente a) ein Ethylen-Vinylacetat-Copolymer mit einem Vinylacetatgehalt unter 25 Gew.-% oder ein Ethylen-Methylacrylat-Copolymer mit einem Methylacrylatgehalt unter 25 Gew.-% darstellt.

3. Folie oder Formkörper nach Anspruch 1 oder 2, **dadurch gekennzeichnet, dass** in Komponente **b1)** der Gehalt an Monomeren (1) 40 bis 80 Gew.-%, insbesondere 50 bis 75 Gew.-%, der Gehalt an Monomeren (2) 10 bis 50 Gew.-%, insbesondere 15 bis 35 Gew.-%, und der Gehalt an Monomeren (3) 2 bis 15 Gew.-%, insbesondere 3 bis 12 Gew.-%, und der Schmelzindex MFI (190°C, 2,16 kg) des Terpolymers zwischen 0,1 und 15 g/10 min, insbesondere zwischen 0,5 und 10 g/10 min, liegt.

4. Folie oder Formkörper nach einem der Ansprüche 1 bis 3, **dadurch gekennzeichnet, dass** die Komponente **b1)** ein Ethylen-Vinylacetat-Kohlenmonoxid-Terpolymer darstellt.

5. Folie oder Formkörper nach mindestens einem der vorangehenden Ansprüche, **dadurch gekennzeichnet, dass** die Komponente **b2)** ein Ethylen-Vinylacetat-Copolymer mit einem Vinylacetatgehalt über 35 Gew.-% oder ein Ethylen-Methylacrylat-Copolymer mit einem Methylacrylatgehalt über 35 Gew.-% darstellt.

6. Folie oder Formkörper nach mindestens einem der vorangehenden Ansprüche, **dadurch gekennzeichnet, dass** zusätzlich ein Ethylen-Copolymer mit einem Schmelzpunkt von 65°C bis 110°C und/oder einer Dichte von 0,86 g/l bis 0,9 g/l in einer Konzentration unterhalb 30 Gew.-% vorliegt, wobei die Comonomere als C₄- bis C₁₂- insbesondere C₄-bis C₈-α-Olefine vorliegen.

7. Folie oder Formkörper nach mindestens einem der vorangehenden Ansprüche, **dadurch gekennzeichnet, dass** der Anteil der Komponente **a)** zwischen 3 und 20 Gew.-%, insbesondere zwischen 5 und 15 Gew.-%, und der Anteil der Komponente **b)** zwischen 5 und 30 Gew.-%, insbesondere zwischen 5 und 25 Gew.-%, jeweils bezogen auf die Gesamtmischung, liegt.

8. Folie oder Formkörper nach mindestens einem der vorangehenden Ansprüche, **dadurch gekennzeichnet, dass** die Komponente c) ausgewählt ist aus mindestens einer der nachfolgenden drei Gruppen, bestehend aus
**c1)** einem gegebenenfalls gepfropften Ethylenhomopolymerisat oder -copolymer einer Dichte über 0,910 g/l, insbesondere über 0,920 g/l, und einem Schmelzindex MFI (190°C, 2,16 kg) von 0,1 bis 30 g/10 min, insbesondere 0,5 bis 10 g/10 min;
**c2)** einem gegebenenfalls gepfropften Polypropylen aus der Gruppe der Homopolymere, Block- oder Random-Copolymere mit C₂- oder C₄- bis C₁₂-α-Olefinen als Comonomere, wobei die Dichte des Polypropylens über 0,90 g/l, der Schmelzpunkt über 120°C und der Schmelzindex MFI zwischen 0,1 und 30 g/10 min (230°C, 2,16 kg) liegt;
c3) unvernetzten, partiell oder vollständig vernetzten thermoplastischen Polyolefin-Elastomeren, enthaltend 10 bis 77 Gew.-% Propylenhomopolymer oder -copolymer und 23 bis 90 Gew.-% eines Copolymers, basierend auf Ethylen und einem oder mehreren C₃-C₁₂-α-Olefinen und/oder einem nichtkonjugierten Dien.

9. Folie oder Formkörper nach Anspruch 8, **dadurch gekennzeichnet, dass** das nichtkonjugierte Dien lineare aliphatische Diene, Alkylidenbicycloalkene, Alkenylbicycloalkene, Bicycloalkandiene und Alkenylcycloalkene umfaßt.

10. Folie oder Formkörper nach mindestens einem der vorangehenden Ansprüche, **dadurch gekennzeichnet, dass** in der Polymermischung aliphatische und/oder naphthenische Prozesshilfsmittel in einer Menge von 1 bis 10 Gew.-%, insbesondere 1 bis 5 Gew.-%, vorliegen, die bei Raumtemperatur flüssig sind und erst unterhalb von 0°C eine wachsartige Konsistenz annehmen.

11. Verwendung der Folie oder des Formkörpers nach mindestens einem der vorhergehenden Ansprüche im Kraftfahrzeugbereich als Airbagverkleidung, Himmel, Kopfstütze, Halteschlaufe, Hutablage, Sitz- oder Rückenpolsterbezug, rückseitige Verkleidung der Vordersitze, Sonnenblende, Trittschutz, Türverkleidung, Laderaumabdeckung oder als Kofferauskleidung und Bucheinband.

12. Verwendung der Folie oder des Formkörpers nach mindestens einem der Ansprüche 1 bis 10 als Laderaumabdeckung, aufgebaut aus einer Ober- und einer Unterfolie, einem dazwischenliegenden Träger sowie gegebenenfalls weiteren Folien und Schichten, wobei die Ober- und Unterfolie die Polymermischung nach mindestens einem der Ansprüche 1 bis 12 enthält.

## Claims

1. Sheet or moulding comprising a high frequency weldable and low temperature flexible polymer mixture in crosslinked form comprising
**a)** 1% to 30% by weight of copolymer of ethylene with a polar comonomer selected from the group of vinyl esters of saturated C₂-C₈ carboxylic acids and of C₁-C₁₂ alkyl acrylates and/or methacrylates, the copolymer having an MFI melt flow index (according to DIN 53 735; 190°C, 2.16 kg) of 0.1 to 30 g/10 min and a comonomer content below 25% by weight;
**b)** 1% to 40% by weight of component b1) or b2) selected from:
(b1) a terpolymer wherein one monomer each is selected from the following three groups consisting of
(1) ethylene, propylene and butylene,
(2) vinyl esters of saturated C₂-C₈ carboxylic acids and C₁-C₁₂ alkyl acrylates and methacrylates, and
(3) carbon monoxide, glycidyl acrylate and glycidyl methacrylate,
wherein the content of monomer (1) is at least 30% by weight, the content of monomer (2) is 10% to 70% by weight and the content of monomer (3) is 1% to 20% by weight and the MFI melt flow index (190°C, 2.16 kg) of the terpolymer is between 0.1 and 30 g/10 min, or
(b2) a copolymer wherein one monomer each is selected from the following two groups consisting of:
(1) ethylene, propylene and butylene, and also
(2) vinyl esters of saturated C₂-C₈ carboxylic acids and C₁-C₁₂ alkyl acrylates and methacrylates;
having an MFI melt flow index (190°C, 2.16 kg) of 0.1 to 30 g/10 min and a comonomer content above 25% by weight, and
**c)** 35 to 75% by weight of a thermoplastic polyolefin having a melting point above 115°C and selected from the group consisting of ethylene homopolymer, ethylene copolymer, propylene homopolymer and propylene copolymer or mixtures thereof, wherein this polymer may be grafted with 0.1% to 7% by weight and particularly 0.5% to 5% by weight of unsaturated carboxylic acid, unsaturated dicarboxylic acid, ester and/or anhydride,
wherein the amount of **a)** to **c)** adds up to 100% by weight and the fraction of the total amount of the polymer mixture which is attributable to components **a)** + **(b1)** or **a)** + **(b2)** is 50% by weight or less.

2. Sheet or moulding according to Claim 1, **characterized in that** the component a) constitutes an ethylene-vinyl acetate copolymer having a vinyl acetate content below 25% by weight or an ethylene-methyl acrylate copolymer having a methyl acrylate content below 25% by weight.

3. Sheet or moulding according to Claim 1 or 2, **characterized in that** in component b1) the content of monomers (1) is 40% to 80% by weight, particularly 50% to 75% by weight, the content of monomers (2) is 10% to 50% by weight, particularly 15% to 35% by weight, and the content of monomers (3) is 2% to 15% by weight, particularly 3% to 12% by weight, and the MFI melt flow index (190°C, 2.16 kg) of the terpolymer is between 0.1 and 15 g/10 min, particularly between 0.5 and 10 g/10 min.

4. Sheet or moulding according to any one of Claims 1 to 3, **characterized in that** the component **b1)** constitutes an ethylene-vinyl acetate-carbon monoxide terpolymer.

5. Sheet or moulding according to at least one of the preceding claims, **characterized in that** the component **b2)** constitutes an ethylene-vinyl acetate copolymer having a vinyl acetate content above 35% by weight or an ethylene-methyl methacrylate copolymer having a methyl acrylate content above 35% by weight.

6. Sheet or moulding according to at least one of the preceding claims, **characterized in that** in addition an ethylene copolymer having a melting point of 65°C to 110°C and/or a density of 0.86 g/l to 0.9 g/l is present in a concentration below 30% by weight, wherein the comonomers are present as C₄ to C₁₂, particularly C₄ to C₈, α-olefins.

7. Sheet or moulding according to at least one of the preceding claims, **characterized in that** the fraction of the overall mixture which is attributable to component **a)** is between 3% and 20% by weight, particularly between 5% and 15% by weight, and to component b) is between 5% and 30% by weight, particularly between 5% and 25% by weight.

8. Sheet or moulding according to at least one of the preceding claims, **characterized in that** the component c) is selected from at least one of the following three groups consisting of
**c1)** an optionally grafted ethylene homopolymer or copolymer having a density above 0.910 g/l, particularly above 0.920 g/l, and an MFI melt flow index (190°C, 2.16 kg) of 0.1 to 30 g/10 min, particularly 0.5 to 10 g/10 min;
**c2)** an optionally grafted polypropylene from the group of homopolymers and block or random copolymers with C₂ or C₄ to C₁₂ α-olefins as comonomers, wherein the density of the polypropylene is above 0.90 g/l, the melting point is above 120°C and the MFI melt flow index is between 0.1 and 30 g/10 min (230°C, 2.16 kg);
**c3)** uncrosslinked or partially or completely crosslinked thermoplastic polyolefin elastomers comprising 10% to 77% by weight of propylene homopolymer or copolymer and 23% to 90% by weight of a copolymer based on ethylene and one or more C₃-C₁₂ α-olefins and/or a nonconjugated diene.

9. Sheet or moulding according to Claim 8, **characterized in that** the nonconjugated diene comprises linear aliphatic dienes, alkylidenebicycloalkenes, alkenylbicycloalkenes, bicycloalkanedienes and alkenylcycloalkenes.

10. Sheet or moulding according to at least one of the preceding claims, **characterized in that** the polymer mixture comprises aliphatic and/or naphthenic processing aids in an amount of 1% to 10% by weight, particularly 1% to 5% by weight, which are liquid at room temperature and only assume a waxlike consistency at below 0°C.

11. Use of the sheet or moulding according to at least one of the preceding claims in the motor vehicle sector as air bag cover, roof liner, head rest, arm strap, parcel shelf, seat or back cushion cover, rear covering of front seats, sun visor, floor protector, door lining, cargo space cover or as trunk lining and book cover.

12. Use of the film or moulding according to at least one of Claims 1 to 10 as cargo space cover constructed from an upper sheet and a lower sheet, a support therebetween and also optionally further sheets and layers, wherein the upper and lower sheets comprise the polymer mixture according to at least one of Claims 1 to 12.

## Revendications

1. Feuille ou corps façonné présentant une teneur en un mélange de polymères sous forme réticulée, pouvant être soudé par des hautes fréquences, souple à froid, contenant
a) 1 à 30% en poids de copolymère d'éthylène avec un comonomère polaire, choisi dans le groupe des esters vinyliques d'acides carboxyliques en C₂-C₈ saturés, des acrylates et/ou des méthacrylates de C₁-C₁₂-alkyle, le copolymère présentant un indice de fusion MFI (selon DIN 53735 ; 190°C, 2,16 kg) de 0,1 à 30 g/10 min et une teneur en comonomère inférieure à 25% en poids ;
b) 1 à 40% en poids du composant b1) ou b2), choisi parmi :
b1) un terpolymère, un monomère étant à chaque fois choisi dans les trois groupes suivants, qui sont constitués par
(1) l'éthylène, le propylène et le butylène,
(2) les esters vinyliques d'acides carboxyliques en C₂-C₈ saturés, les acrylates et les méthacrylates de C₁-C₁₂-alkyle et
(3) le monoxyde de carbone, l'acrylate et le méthacrylate de glycidyle, la teneur en monomère (1) étant d'au moins 30% en poids, la teneur en monomère (2) étant de 10 à 70% en poids et la teneur en monomère (3) étant de 1 à 20% en poids et l'indice de fusion MFI (190°C, 2,16 kg) du terpolymère étant situé entre 0,1 et 30 g/10 min, ou
(b2) un copolymère, un monomère étant à chaque fois choisi dans les deux groupes suivants, qui sont constitués par
(1) l'éthylène, le propylène et le butylène ainsi que
(2) les esters vinyliques d'acides carboxyliques en C₂-C₈ saturés, les acrylates et les méthacrylates de C₁-C₁₂-alkyle ;
présentant un indice de fusion MFI (190°C, 2,16 kg) de 0,1 à 30 g/10 min et une teneur en comonomères supérieure à 25% en poids et
c) 35 à 75% en poids d'une polyoléfine thermoplastique présentant un point de fusion supérieur à 115°C, choisie dans le groupe constitué par les homopolymères d'éthylène, les copolymères d'éthylène, les homopolymères de propylène et les copolymères de propylène ou leurs mélanges, ce polymère pouvant être greffé par 0,1 à 7% en poids, en particulier 0,5 à 5% en poids d'acide carboxylique insaturé, d'acide dicarboxylique insaturé, leurs esters et/ou anhydrides,
la quantité de a) à c) se complétant au total à 100% en poids et la proportion des composants a) + b1) ou a) + b2), par rapport à la quantité totale du mélange de polymères, étant de 50% en poids ou moins.

2. Feuille ou corps façonné selon la revendication 1, **caractérisé**(e) en ce que le composant a) représente un copolymère d'éthylène-acétate de vinyle présentant une teneur en acétate de vinyle inférieure à 25% en poids ou un copolymère d'éthylène-acrylate de méthyle, présentant une teneur en acrylate de méthyle inférieure à 25% en poids.

3. Feuille ou corps façonné selon la revendication 1 ou 2, **caractérisé**(e) en ce que dans le composant b1) la teneur en monomères (1) est de 40 à 80% en poids, en particulier de 50 à 75% en poids, la teneur en monomères (2) est de 10 à 50% en poids, en particulier de 15 à 35% en poids, et la teneur en monomères (3) est de 2 à 15% en poids, en particulier de 3 à 12% en poids, et l'indice de fusion MFI (190°C, 2,16 kg) du terpolymère est situé entre 0,1 et 15 g/10 min, en particulier entre 0,5 et 10 g/10 min.

4. Feuille ou corps façonné selon l'une quelconque des revendications 1 à 3, **caractérisé**(e) en ce que le composant b1) représente un terpolymère d'éthylène-acétate de vinyle-monoxyde de carbone.

5. Feuille ou corps façonné selon au moins l'une quelconque des revendications précédentes, **caractérisé**(e) en ce que le composant b2) représente un copolymère d'éthylène-acétate de vinyle présentant une teneur en acétate de vinyle supérieure à 35% en poids ou un copolymère d'éthylène-acrylate de méthyle, présentant une teneur en acrylate de méthyle supérieure à 35% en poids.

6. Feuille ou corps façonné selon au moins l'une quelconque des revendications précédentes, **caractérisé**(e) en ce qu'un copolymère d'éthylène présentant un point de fusion de 65°C à 110°C et/ou une densité de 0,86 g/l à 0,9 g/l est en outre présent, en une concentration inférieure à 30% en poids, les comonomères étant présents sous forme d'α-oléfines en C₄-C₁₂, en particulier en C₄-C₈.

7. Feuille ou corps façonné selon au moins l'une quelconque des revendications précédentes, **caractérisé**(e) en ce que la proportion du composant a) est située entre 3 et 20% en poids, en particulier entre 5 et 15% en poids, et la proportion du composant b) est comprise entre 5 et 30% en poids, en particulier entre 5 et 25% en poids, à chaque fois par rapport au mélange total.

8. Feuille ou corps façonné selon au moins l'une quelconque des revendications précédentes, **caractérisé**(e) en ce que le composant c) est choisi dans au moins un des trois groupes suivants, constitués par
c1) un homopolymère ou un copolymère d'éthylène le cas échéant greffé, présentant une densité supérieure à 0,910 g/l, en particulier supérieure à 0,920 g/l, et un indice de fusion MFI (190°C, 2,16 kg) de 0,1 à 30 g/10 min, en particulier de 0,5 à 10 g/10 min ;
c2) un polypropylène le cas échéant greffé du groupe des homopolymères, des copolymères à blocs ou statistiques présentant des α-oléfines en C₂ ou en C₄ à C₁₂ comme comonomères, la densité du polypropylène étant supérieure à 0,90 g/l, le point de fusion étant supérieur à 120°C et l'indice de fusion MFI étant situé entre 0,1 et 30 g/10 min (230°C, 2,16 kg) ;
c3) les élastomères de polyoléfine thermoplastiques, non réticulés, partiellement ou totalement réticulés, contenant 10 à 77% en poids d'un homopolymère ou d'un copolymère de propylène et 23 à 90% en poids d'un copolymère, à base d'éthylène et d'une ou de plusieurs α-oléfines en C₃-C₁₂ et/ou d'un diène non conjugué.

9. Feuille ou corps façonné selon la revendication 8, **caractérisé**(e) en ce que le diène non conjugué comprend des diènes aliphatiques linéaires, des alkylidènebicycloalcènes, des alcénylbicycloalcènes, des bicycloalcanediènes et des alcénylcycloalcènes.

10. Feuille ou corps façonné selon au moins l'une quelconque des revendications précédentes, **caractérisé**(e) en ce que des adjuvants de processus aliphatiques et/ou naphténiques, qui se trouvent dans le mélange de polymères en une quantité de 1 à 10% en poids, en particulier de 1 à 5% en poids, sont liquides à température ambiante et ne prennent une consistance cireuse qu'au-dessous de 0°C.

11. Utilisation de la feuille ou du corps façonné selon au moins l'une quelconque des revendications précédentes, dans le domaine des véhicules, comme revêtement d'airbag, ciel, appuie-tête, sangles, porte-chapeaux, revêtement de rembourrage de siège ou de dossier, revêtement arrière des sièges avant, pare-soleil, protection de marchepied, revêtement de porte, recouvrement de coffre ou comme revêtement de coffre et reliure de livre.

12. Utilisation de la feuille ou du corps façonné selon au moins l'une quelconque des revendications 1 à 10 comme recouvrement de coffre, constitué par une feuille supérieure et une feuille inférieure, un support intermédiaire ainsi que le cas échéant d'autres feuilles et couches, la feuille supérieure et inférieure contenant le mélange de polymères selon au moins l'une quelconque des revendications 1 à 12.
